# EUROPEAN PATENT SPECIFICATION

(11) **EP 2 666 844 B1**
(45) Date of publication and mention of the grant of the patent: **10.06.2020**
(21) Application number: 12715238.7
(22) Date of filing: 18.01.2012
(51) Int. Cl.: C10G 45/00, C10G 65/00, C07C 5/00

(54) **NAPHTHA ISOMERISATION ON THREE CATALYTIC REACTION ZONES INSIDE A DISTILLATION COLUMN**
NAPHTA ISOMERISATION AUF DREI KATALYSATORZONEN INNERHALB EINER DESTILLATIONSSÄULE
ISOMÉRISATION DU NAPHTHA DANS TROIS ZONES RÉACTIONNELLES À L'INTÉRIEUR D'UNE COLONNE DE DISTILLATION

(30) Priority: 19.01.2011 US 201161434427 P
(43) Date of publication of application: 27.11.2013
(73) Proprietor: Kellogg Brown & Root LLC, Houston, Texas 77002 (US)
(72) Inventor: GIYAZOV, Oleg Valerievich, Kirishi Leningradskaya oblast 187110 (RU); PARPUTS, Oleg Igorevich, Kirishi Leningradskaya oblast 187110 (RU)
(74) Representative: Weickmann & Weickmann PartmbB
(86) International application number: PCT/RU2012/000038
(87) International publication number: WO 2012/099506

(56) References cited:
- WO-A1-2004/029010
- WO-A2-2008/063584
- US-A- 5 948 948
- US-B1- 6 365 791

## Description

### Scope of invention

The invention applies to the field of the oil-refining and petrochemical industry, namely, to methods of obtaining high-octane components of petrol.

### Prior art

Until recently, benzene has been widely used as a component in automotive fuel to increase its octane number. In particular, benzene-containing reformate, obtained by catalytic reforming of straight-run naphthas has been used as a high-octane component in automotive and aviation fuels.

However, current ecological safety concerns demand a reduction in the benzene content of petrol, in which regard the problem arises of maintaining antiknock properties, i.e. a high octane number. Benzene content of reformate or its fractions can be reduced by the hydrogenation of benzene to give cyclohexane, however, cyclohexane is a low-octane substance and is unsuitable as a component of motor fuel. Its isomer, methylcyclopentane, could be a more useful component.

There is a known method (US 5830345) for the production of high-octane components of petrol from petroleum feedstock, in which the naphtha enriched fraction of this feedstock, which also contains C5-C7 alkanes, undergoes a hydrogenation reaction and isomerisation on a bifunctional catalyst in a reactive rectification process. However, concurrent hydrogenation of benzene and isomerisation, both of the produced cyclohexane and C5-C7 alkanes at a single reaction site leads to competitive interaction of all components of the feedstock with the catalyst, as a result of which reactions do not fully proceed, and it is not possible to attain the desired increase in the octane number.

In an analagous situation, a different method (WO 2006/088528) uses two separate catalysts instead of a bifunctional catalyst: a hydrogenation catalyst and an isomerisation catalyst. However, competitive interaction of cyclohexane and C5-C7 alkanes with the catalyst continues to occur with on the hydrogenation catalyst, resulting in incomplete conversion. In addition, the very high molecular weight of cyclohexane prevents its delivery to the isomerisation catalyst located above the hydrogenation catalyst in the rectification column, which further limits the possibility of isomerisation of cyclohexane to methylcyclopentane and, consequently, prevents attainment of the desired octane number.

There is a known method (US6365791) of treating a hydrocarbon feedstock in a distillation zone using a hydrogenation catalyst and a gas stream comprising hydrogen, and obtaining a reformate which is almost completely free of benzene. This document may be useful in understanding the background to the present disclosure. US5948948 discloses a process for isomerising a feed and the corresponding apparatus comprising passing said feed to a distillation zone, associated with an isomerisation reaction zone, wherein the reaction zone is at least partially internal to the distillation zone.

### Summary of the invention

Thus, the problem still exists of producing high-octane components of petrol with a reduced benzene content and minimum loss of the octane number, and of creating processes that could allow the most effective use of feedstock components and reduce expenditure on the production of high-octane components of petrol.

This objective is met by the proposed reactive rectification system according to claim 1 : A reactive rectification system for the production of high-octane components of gasoline, comprising a rectification column having a feed zone and hydrogen-bearing gas supply zone, the system also containing a minimum of three reaction zones, whereas at least one of the reaction zones is located inside of the reactive-rectification column, at least one of which is a benzene hydroisomerisation zone, at least another of which is a hexane isomerisation zone and at least another of which is a pentane isomerisation zone, the benzene hydroisomerisation zone is located below all the other reaction zones and is situated in the lower part of the column, the hexane isomerisation zone is situated above the feed zone and below the pentane isomerisation zone, the system also contains at least one side draw situated above the hexane isomerisation zone and below the pentane isomerisation zone.

It is expedient for all three reaction zones to be situated inside the rectification column.

In one embodiment the system contains four distillation zones in such a way that all reaction zones are separated by distillation zones.

It is expedient for the feed zone to be situated above the benzene hydroisomerisation zone.

It is preferable that each reaction zone in the system has a dedicated hydrogen supply zone.

The catalyst of the lower hydroisomerisation zone can be zeolite coated with a Group VIII metal.

The catalyst of upper isomerisation zones can be a Group IV metal oxide, coated with a Group VIII metal, and promoted by sulphate and (or) tungstate ions.

A method is also proposed to produce high-octane components of petrol, wherein the feed flow is supplied to the feed zone of the reactive rectification column, being a part of the reactive rectification system and containing a minimum of three reaction zones, at least one of which is a benzene hydroisomerisation zone situated directly in the column, at least another of which is a hexane isomerisation zone and at least another of which is a pentane isomerisation zone. Benzene hydroisomerisation occurs in the benzene hydroisomerisation zone situated in the lower part of the column below all other reaction zones. Hexane isomerisation occurs in the hexane isomerisation zone situated above the feed zone and below the pentane isomerisation zone. Pentane isomerisation occurs in the pentane isomerisation zone, moreover isohexanes are recovered from the side draw of the column situated above the hexane isomerisation zone and below the pentane isomerisation zone, isopentanes are recovered from the top of the column, and cyclopentanes are recovered from the bottom of the column. It is expedient for the feed flow temperature to be such that the flow is vapour-liquid, with the benzene advantageously in liquid phase.

It is preferable that the feed flow is supplied to the distillation zone of the column situated between the isomerisation and hydroisomerisation zones, moreover it is preferable that the feed flow is separated into two flows when entering the column, one of which is descending and contains benzene and components with a higher molecular mass, and the second flow is ascending and contains components with a molecular mass lower than the molecular mass of benzene.

According to one embodiment of the invention, C4-C6 alkanes are delivered from the feed flow to the isomerisation reaction zone situated above the feed flow inlet point, whereas aromatics, cycloalkanes and C7 alkane hydrocarbons and heavier feeds are delivered to the hydroisomerisation reaction zone situated below the feed flow inlet point.

In one embodiment, isomerisation reactions occur in reaction zones outside of the column, and the product mixture is returned to the column.

It is expedient to mix hydrocarbons and hydrogen directly in the reaction zone, furthermore hydrogen is delivered to each zone separately.

The feed flow usually consists of a fraction of C4-C8 hydrocarbons containing benzene at a concentration between 0 and 30 % by mass.

Hydroisomerisation of benzene can occur on a catalyst of zeolite coated with a Group VIII metal.

Isomerisation can occur on a catalyst of a Group IV metal oxide coated with a Group VIII metal and promoted by sulphate and (or) tungstate ions.

It is expedient for the hydrogen : hydrocarbon molar ratio to comprise between 0.01 and 5 to 1, preferably between 0.01 and 3 to 1, more preferably between 0.1 and 3 to 1, and yet more preferably between 0.08 and 1.5 to 1.

It is expedient for the column pressure to be in the range of 1013 and 4053 kPa (10 to 40 atm gauge), and preferably between 3040 and 3546 kPa (30 and 35 atm gauge). It is expedient for the column temperature to be in the range of 80 to 350°C, preferably between 80 and 300°C, and more preferably between 150 and 280°C.

In one embodiment of the invention the temperature in the upper part of the column top is in the range of 80 to 220°C, preferably between 150 and 200°C, whereas the temperature in the lower part of the column is in the range of 120 to 350°C, preferably between 220 and 280°C.

The authors of this invention unexpectedly discovered that the problem of competition of feedstock components in the reaction can be resolved by the use of at least three reaction zones, one of which is used for hydrogenation and isomerisation of benzene, and two other zones are used for isomerisation of alkanes.

The benzene hydrogenation zone has usually been accommodated in the upper part of the column above the feedstock feed zone in known prior art rectification systems. The authors of this invention propose accommodating it as low as possible, preferably even below the feedstock feed zone, resulting in the exothermic effect of the hydrogenation reaction being effectively expended on evaporation of liquid in the reaction zone, thereby reducing energy expenditure on the reactive rectification column reboiler and overall energy expenditure of the reactive rectification system. It is preferable to deliver feedstock to the column in a vapour-liquid state, with benzene advantageously in liquid phase. On the one part, this reduces expenditure on heating feedstock (in prior art systems benzene was in the gaseous phase in the feedstock flow, ensuring its upward movement through the column, which requires greater heating), whereas on the other part this allows fuller exploitation of the exothermic effect of the hydrogenation reaction occurring in the reaction zone below the feedstock feed zone where liquid benzene is delivered.

The authors also unexpectedly discovered that when C7 linear alkane hydrocarbons contained in the benzene fraction are added to the feedstock flow under process conditions, C7 hydrocarbons isomerise to high-octane components, which increases the octane number of the bottom product.

It was also unexpectedly discovered that a C7 hydrocarbon disproportionation reaction occurs in the lower reaction zone under process conditions, wherein C6 and C8 high-octane components are formed, likewise increasing the octane number of the bottom product.

A side reaction of cracking with the formation of C3-C4 light hydrocarbons is minimised in the proposed process, since the main products are removed from the reaction zone prior to formation of light hydrocarbons.

### Brief description of drawings

Fig. 1 illustrates the arrangement of the reactive rectification process, wherein all reaction zones are situated within the reactive rectification column.
Fig. 2 illustrates the arrangement of the reactive rectification process, wherein at least one isomerisation reaction zone is removed outside the reactive rectification column.
Fig. 3 illustrates the arrangement of the reactive rectification process, wherein at least two isomerisation reaction zones are removed outside the reactive rectification column.

### Detailed description of the invention

This invention applies to an industrial process in the form of a single reactive rectification process.

The term "reactive rectification process" is used to describe an integrated process of concurrently conducting catalytic reactions and distillation in a column. The term "reactive distillation", "catalytic distillation" or any other term describing a concurrent combination of conducting catalytic reactions and distillation in a column can also be used to describe the process.

The reactive rectification process combining catalytic reactors and distillation zones in a single column, i.e. supporting combined chemical reaction with separation of the reaction mixture in a single apparatus, has advantages in the kinetic, thermodynamic and economic aspects.

Light straight-run naphtha along with the light fraction of reformate, containing primarily benzene and other components with similar boiling points, can be feedstock of the method. In general, the feedstock consists of hydrotreated products from primary distillation of oil, in particular light straight-run petrol, and from catalytic reforming, in particular light reformate containing advantageously benzene and other components with similar boiling points. The feed flow usually consists of C4-C8 or C5-C8 hydrocarbons, which can contain up to 30 % benzene by mass. The feedstock (feed flow) includes saturated and unsaturated alkanes of normal and isomeric structure, cycloalkanes and aromatic hydrocarbons.

Benzene contained in the feedstock undergoes hydrogenation, whereas the other hydrocarbons undergo reactions providing a higher octane number, in particular isomerisation reactions.

Hydrogenation of benzene and isomerisation of the resulting cyclohexane occur in the "benzene hydroisomerisation zone". Hydroisomerisation of hydrocarbons containing advantageously 6 or more carbon atoms, including saturated and unsaturated alkanes of normal and isomeric structure, cycloalkanes, and aromatic hydrocarbons, in particular benzene, occurs in this zone.

Isomerisation of hydrocarbons containing advantageously from 5 to 8 carbon atoms, including saturated and unsaturated alkanes of normal and isomeric structure, cycloalkanes and aromatic hydrocarbons, occurs in the two other reaction zones. These two isomerization zones can be situated outside the column, so the corresponding phase is delivered to them from the distillation zone, whereas the isomerisation product is returned to the column. The two isomerisation zones are situated one above the other, so different raw materials are supplied to these zones, meaning that the product of the lower zone is generally isohexanes, therefore the lower zone is called the "hexane isomerisation zone", whereas the product of the upper zone is generally isopentanes, therefore the upper zone is called the "pentane isomerisation zone".

The applicant also discovered that two and even three reaction zones can be situated directly in the rectification column.

Thus, the reactive rectification process advantageously comprises at least four distillation and three reaction zones. At least one reaction zone is situated inside the reactive rectification column. The remaining reaction zones are situated advantageously inside the reactive rectification column; however, they can be removed outside the reactive rectification column and constructed as stand-alone units with associated auxiliary equipment, as known to any person of ordinary skill in the art, so they are still a part of the reactive rectification process.

As known to any person of ordinary skill in the art, distillation zones performing continuous fractionation can include rectification separation trays, an unstructured mass-transfer packing and a structured mass-transfer packing.

The process uses a hydrogen-bearing gas, which is any suitable gas containing hydrogen. Such a gas can also contain hydrocarbons, in particular C1-C3. The reforming gas can be used as the hydrogen-containing gas. Hydrogen is consumed in the benzene hydrogenation reaction, it is not consumed in isomerisation reactions, but it is needed to maintain the stability and activity of the catalysts. Hydrogen is supplied to the bottom of the column, preferably to the bottom of each reaction zone.

### General process diagram

Feedstock is supplied to the reactive rectification column at the feedstock supply zone.

Hydrogenation and isomerisation reactions occur in at least three reaction zones. The gas flow escaping the top of the column contains isomerisation reaction products, including advantageously isopentane, and likewise hydrogen-bearing gas and hydrocarbons containing 2 to 4 atoms of carbon, formed as a result of the occurrence of a cracking reaction in the reaction zones, including two isomerisation reaction zones and one hydroisomerisation reaction zone.

The gas flow escaping the top of the column is delivered to a condenser, from which it enters a distillate-collection container in the liquid and vapour form, to provide a liquid distillate used to provide reflux in the reactive rectification column and draw distillate product flow. The vapour phase, consisting of uncondensed hydrocarbons, leaves the reactive rectification system from the distillate-collection container. The liquid phase from the distillation-collection container is used as reflux of the reactive rectification column and distillate product draw respectively.

A product side draw line is arranged in the distillation zone of the reactive rectification column situated between the isomerisation reaction zones. Components recovered through the side draw are advantageously high-octane hydrocarbons containing from 5 to 7 carbon atoms, including such hydrocarbons as isopentane, methylpentanes, dimethylbutanes, and other hydrocarbons, generally isomeric structures, as well as methylcyclopentane.

The liquid product is delivered from the bottom of the reactive rectification column to the reactive rectification column reboiler. The reboiler together with the hydroisomerisation reaction zone or alone provides the necessary vapour flow to the bottom of the reactive rectification column. The reboiler also maintains stable operating conditions in the reactive rectification column. The vapour flow from the reboiler returns advantageously to the lower part of the reactive rectification column, whereas the liquid flow leaves the reactive rectification system as bottom product. The bottom product consists of hydrocarbons containing advantageously six or more carbon atoms, including cyclohexane and methylcyclopentane, moreover, the methylcyclopentane content is generally greater than the cyclohexane content.

### Reactive rectification process conditions

The following values are generally defined for operating conditions of the reactive rectification process. Pressure in the reactive rectification column is in the range of 1-40 bars absolute, preferably in the range of 20-35 bars absolute.

The temperature in the upper part of the reactive rectification column is generally in the range of 80-220°C, preferably in the range 120-200°C, and the temperature in the lower part of the reactive rectification column is generally in the range of 120-350°C, preferably in the range of 200-280°C. The hydrogen to feedstock molar ratio is generally in the range of between 0.01 and 5 to 1, preferably between 0.01 and 3 to 1, more preferably between 0.08 and 3 to 1, and yet more preferably between 0.08 and 1.5 to 1.

Operating conditions for the reaction zones situated inside the reactive rectification column are determined by process parameters in the reactive rectification column and optimum process parameters for the isomerisation and/or hydrogenation and/or hydroisomerisation reactions, and are in an interval between the parameter values for the upper and lower parts of the reactive rectification column.

Operating conditions for reaction zones removed outside the reactive rectification column, if used, are generally determined by the following values. The pressure is in the range of 1-60 bars absolute, preferably in the range of 5-35 bars absolute. The temperature is generally in the range of 60-400°C, preferably in the range of 100-300°C. The hydrogen to feedstock molar ratio is generally in the range of between 0.01 and 5 to 1, preferably between 0.01 and 3 to 1, more preferably between 0.08 and 3 to 1, and yet more preferably between 0.08 and 1.5 to 1.

### Description of structural arrangement of reaction zones

The structural arrangement of reaction zones situated inside the reactive rectification column is functionally designed advantageously for catalytic reaction; however, it can also concurrently perform distillation function.

A reaction zone arrangement is used "with a fluid flow codirectional with the flow of hydrogen-bearing gas ascending through the catalyst layer".

The catalyst in the reaction zone is accommodated in pipes and/or in containers situated on a mesh, which performs the function of both supporting the catalyst and delivering the hydrogen-bearing gas to the reaction zone.

The liquid flows into the reaction zone from the higher-placed distillation zone through the distributor of the reaction zone. Movement of liquid inside the reaction zone is arranged codirectionally with the flow of hydrogen-bearing gas, following an ascending flow through the catalyst layer.

The vapour phase enters the reaction zone from a lower-placed distillation zone. Movement of the vapour phase is arranged through pipes and/or containers situated adjacent to the catalyst-filled pipes and/or containers. The liquid from the catalyst-filled pipes and/or containers can flow through pipes and/or containers in which the vapour phase ascends. The pipes and/or containers through which the vapour phase ascends can be hollow or filled with inert mass-transfer packing (either unstructured or structured) to improve the mass-transfer process, as known to any person of ordinary skill in the art.

Hydrogen-bearing gas is delivered to the reaction zone through a pipeline, preferably connected to the lower part of the reaction zone. Distribution and delivery of hydrogen-bearing gas to the catalyst-filled pipes and/or containers is arranged using a distributor and/or distribution manifold for the hydrogen-bearing gas, preferably situated in the lower part of the reaction zone.

The structural arrangement of reaction zones removed outside the reactive rectification column is based on the application of the most modern and common methods and solutions for stand-alone apparatus with associated auxiliary equipment used for isomerisation and/or hydrogenation and/or hydroisomerisation reactions, known to any person of ordinary skill in the art.

### Description of catalysts used in the reactive rectification process

Catalysts containing metals of Group VIII of the periodic system of chemical elements, coated, by methods known to any person of ordinary skill in the art, onto supports, such as active aluminium oxide, beta-zeolite, pentasils (ZSM-5 type), and mordenite, are used in hydroisomerisation reaction zones. The aforementioned supports can be modified by halogens, such as F and/or Cl and other elements.

The process advantageously uses catalysts based on synthetic and/or natural mordenite mixed with active aluminium oxide, modified by halogens Cl and/or F, and coated with Group VIII metals, such as Ni, Pt, and Pd.

Catalysts containing Group VIII metals of the periodic system of chemical elements, such as Ni, Pt, and Pd, coated onto supports of ZrO2/SO4(SO3) and Zr02/W203, so called solid superacids, are used in isomerisation reaction zones situated inside the reactive rectification column. Solid and/or coated heteropoly acids can be used as catalysts. The aforementioned catalysts can be promoted by Mn, Fe, halogens Cl and/or F, and other elements.

The majority of contemporary standard isomerisation catalysts, known to any person of ordinary skill in the art, can be used in isomerisation reaction zones

### Examples of embodiment of the invention

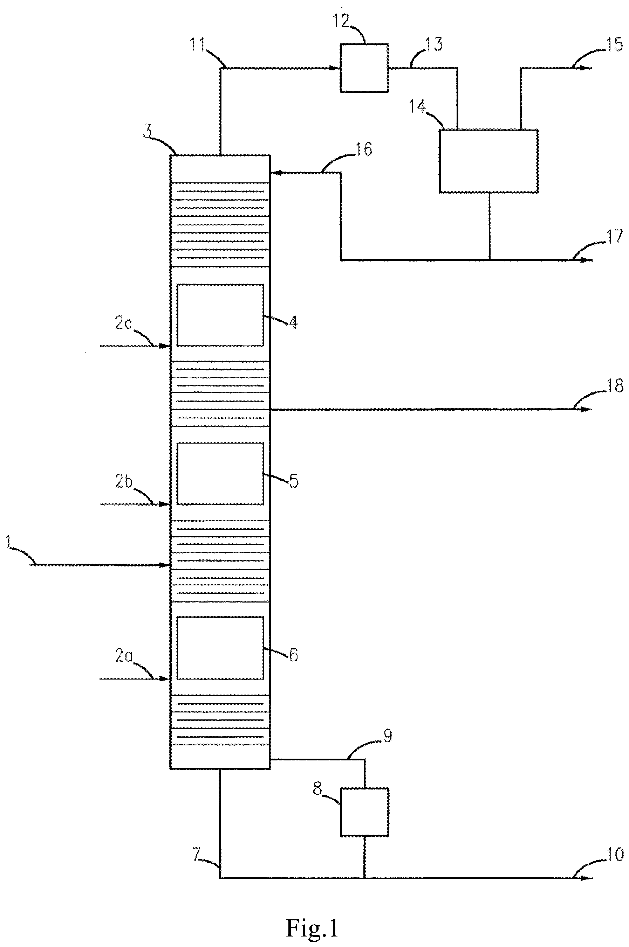

### Example 1. The reactive rectification process, wherein all reaction zones are situated within the reactive rectification column (Fig. 1).

Feedstock is delivered to the reactive rectification column (3) through line (1).

The reactive rectification column consists of three reaction zones (4), (5) and (6), situated between distillation zones inside the reactive rectification column (3). Reaction zones (4) and (5) are situated advantageously closer to the upper and middle parts of reactive rectification column (3) respectively. The hydrocarbon isomerisation catalyst is loaded into reaction zones (4) and (5).

Reaction zone (6) is situated advantageously closer to the lower part of the reactive rectification column (3). The hydroisomerisation catalyst is loaded into reaction zone (6). Benzene is hydroisomerised to cyclohexane and methylcyclopentane, moreover benzene is hydroisomerised advantageously to methylcyclopentane. Hydrogen-bearing gas is supplied to the reaction zones through lines (2c), (2b) and (2a), advantageously to the lower part of reaction zones (4), (5) and (6) respectively. The gas flow escaping from the top of the column through line (11) contains products of isomerisation, including advantageously isopentane.

The gas flow escaping from the top of the column through line (11) enters condenser (12), from which it reaches the distillate-collection container (14) through line (13) in liquid and vapour form. The vapour phase, consisting of uncondensed hydrocarbons, leaves the reactive rectification system from the container (14) through line (15). The liquid phase from the container (14) is directed through lines (16) and (17) as reflux of reactive rectification column (3) and the distillate product draw respectively.

The product side draw line (18) is arranged in the distillation zone of the reactive rectification column situated between isomerisation reaction zones (4) and (5). Components drawn through the product side draw are, in particular, isopentane, methylpentanes, dimethylbutanes, and also methylcyclopentane.

The liquid product is delivered from the bottom of reactive rectification column (3) through line (7) to the reactive rectification column reboiler (8). The reboiler (8), together with hydroisomerisation reaction zone (6) or separately, provides the necessary vapour flow to the bottom of the reactive rectification column (3). The reboiler (8) also maintains stable operating conditions in the reactive rectification column, as known to any person of ordinary skill in the art. The vapour flow from the reboiler (8) returns to the lower part of the reactive rectification column (3), and the liquid flow through line (10) leaves the reactive rectification system as bottom product. The bottom product (10) consists of hydrocarbons, containing, in particular, cyclohexane and methylcyclopentane, moreover, the methylcyclopentane content is higher than the cyclohexane content.

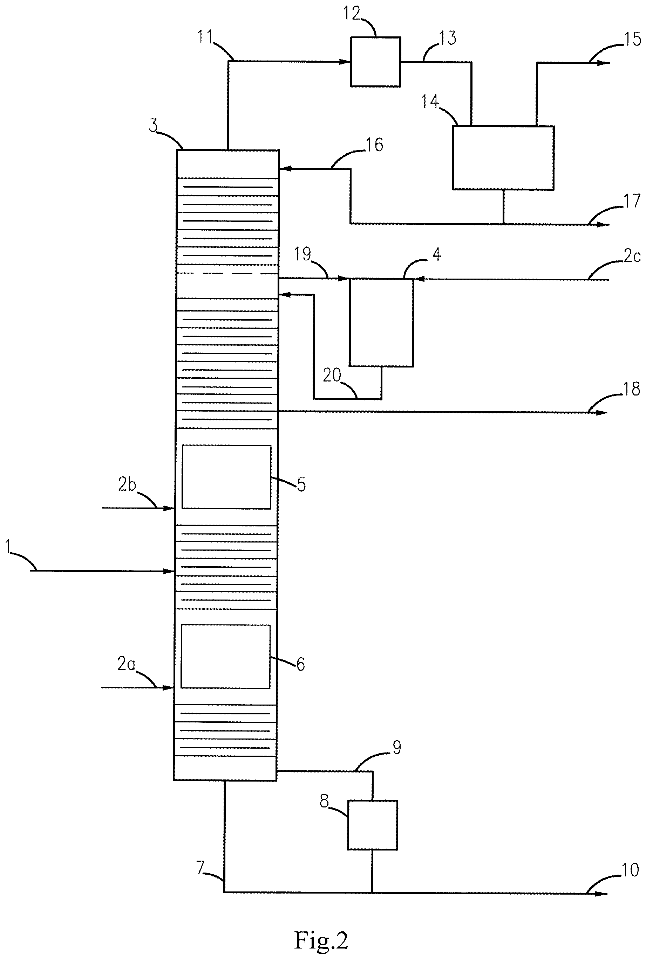

### Example 2. The reactive rectification process, in which one isomerisation reaction zone is removed outside the reactive rectification column (Fig. 2)

The reactive rectification process illustrated in Fig. 2 is arranged in a similar way to the reactive rectification process described in Example 1, with the following changes: The liquid and/or vapour phase flows from the distillation zone situated advantageously closer to the upper part of the reactive rectification column (3) through line (19) to the isomerisation reaction zone (4). The isomerisation reaction zone (4) is constructed as a stand-alone unit with associated auxiliary equipment, as known to any person of ordinary skill in the art, so it is still a part of the reactive rectification system. Isomerisation reaction products in the liquid and/or vapour phase return through line (20) to the reactive rectification column (3). The hydrogen-bearing gas is supplied through line (2c) advantageously to the upper part of reaction zone (4), or is mixed with the liquid and/or vapour flow of line (19) and together enters advantageously the upper part of reaction zone (4).

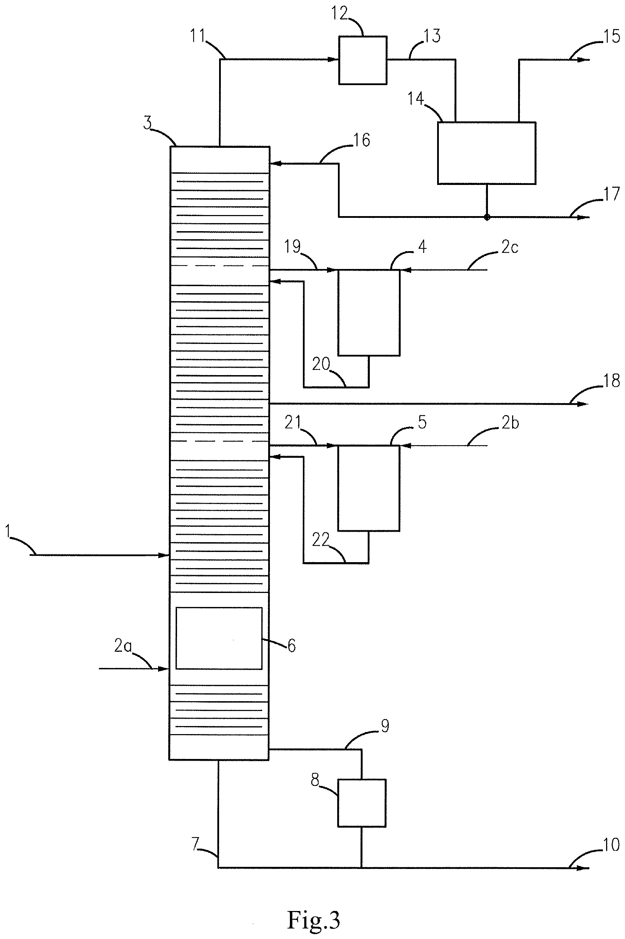

### Example 3. The reactive rectification process, in which two isomerisation reaction zones are removed outside the reactive rectification column (Fig. 3).

The reactive rectification process illustrated in Fig. 3 is arranged in a similar way to the reactive rectification process described in Example 2, with the following changes: The liquid and/or vapour phase from the distillation zone, situated advantageously between the feedstock inlet into the reactive rectification column (3) though line (1) and side product draw line (18), reaches the isomerisation reaction zone (5) through line (21). The isomerisation reaction zone (5) is constructed as a stand-alone unit with associated auxiliary equipment, as known to any person of ordinary skill in the art, so it is still a part of the reactive rectification system. Isomerisation reaction products in liquid and/or vapour phase return through line (22) to the reactive rectification column (3). The hydrogen-bearing gas is supplied through line (2b), advantageously to the upper part of reaction zone (5), or is mixed with the liquid and/or vapour flow of line (21), and together enters advantageously the upper part of reaction zone (5).

### Example 4. The reactive rectification process, in which all reaction zones are situated within the reactive rectification column (Fig. 1).

The feedstock flow (model mixture), having the composition shown in Table 1, was supplied to a column with three reactors and 4 distillation zones under the following conditions:
Pressure 25 atm
Temperature of top of column 170°C
Temperature of bottom of column 245°C
Volume velocity of supply of feedstock -3 hr⁻¹
Hydrogen : feedstock molar ratio 3:1

Wherein products were obtained, the composition of which is shown in Table 2

**Table 1 - Feedstock composition**

| Component | Content, % mass |
|---|---|
| n-pentane | 35 |
| n-hexane | 30 |
| Benzene | 25 |
| n-heptane | 10 |

**Table 2 - Composition and yield of products**

| component | Top draw, % mass | Side draw, % mass | Bottom product, % mass |
|---|---|---|---|
| Sum C3-C4 | 3.8 | - | - |
| Isopentane | 93.0 | 1.0 | - |
| n-pentane | 3.2 | 2.0 | - |
| 2,2-dimethylbutane | - | 60.0 | - |
| 2,3-dimethylbutane | - | 19.0 | - |
| 2-,3-methylpentanes | - | 15.0 | - |
| n-hexane | - | 3.0 | 3.74 |
| Benzene | - | - | 0.1 |
| Cyclohexane | - | - | 28.5 |
| Methylcyclopentane | - | - | 42.8 |
| I-C7 | - | - | 17.0 |
| n-C7 | - | - | 3.0 |
| Sum C8 | - | - | 4.86 |
| Yield, % mass | 36.4 | 30.0 | 34.6 |

## Claims

1. A reactive rectification system for the production of high-octane components of gasoline comprising
a rectification column having a feed zone and hydrogen-bearing gas supply zone, the system also containing a minimum of three reaction zones, whereas at least one of the reaction zones is located inside of the reactive-rectification column,
at least one of which is a benzene hydroisomerisation zone,
at least another of which is a hexane isomerisation zone and
at least another of which is a pentane isomerisation zone,
the benzene hydroisomerisation zone is located below all the other reaction zones and is situated in the lower part of the column,
the hexane isomerisation zone is situated above the feed zone and below the pentane isomerisation zone,
the system also contains at least one side draw situated above the hexane isomerisation zone and below the pentane isomerisation zone.

2. The reactive rectification system according to claim 1, where all three reaction zones are situated inside the rectification column and preferably further comprising four distillation zones in such a way that all the reaction zones are separated by distillation zones and where each reaction zone has a dedicated hydrogen supply zone.

3. The reactive rectification system according to claim 1,
where the feed zone is situated above the benzene hydroisomerisation.

4. The reactive rectification system according to claim 1,
where the catalyst of the benzene hydroisomerisation zone is zeolite coated with a Group VIII metal and
where the catalyst of the pentane and hexane isomerisation zones is a Group IV metal oxide coated with a Group VIII metal and promoted by sulphate and (or) tungstate ions.

5. Method of producing high-octane components of gasoline using the reactive rectification system of claim 1 comprising the steps of
- supplying the feed flow to the feed zone of the reactive rectification column,
- recovering isohexanes from the side draw of the reactive rectification column,
- recovering isopentanes from the top of the reactive rectification column, and
- recovering cyclopentanes from the bottom of the column.

6. The method according to claim 5, wherein the feed flow temperature is such that the flow is vapour-liquid, with benzene is advantageously in liquid phase.

7. The method according to claim 6, where the feed flow is delivered into the column distillation zone situated between the isomerisation and hydroisomerisation zones.

8. The method according to claim 7,
wherein the feed flow is separated into two flows when entering the reactive rectification column with one flow descending and containing benzene and components with a higher molecular mass, and the second flow ascending and containing components with a molecular mass lower than the molecular mass of benzene, or
wherein C4-C6 alkanes are delivered from the feed flow to the isomerisation reaction zone situated above the feed flow inlet point and aromatics, cycloalkanes, C7 alkane hydrocarbons and heavier feeds are delivered to the hydroisomerisation reaction zone situated below the feed flow inlet point.

9. The method according to claim 5, wherein isomerisation reactions occur in reaction zones which are situated outside of the column, and the product mixture is being returned to the column.

10. The method according to claim 5, wherein hydrocarbons and hydrogen are mixed directly in the reaction zones and hydrogen is delivered to each reaction zone separately.

11. The method according to claim 5, where the feed flow consists of a fraction of C4-C8 hydrocarbons containing benzene at a level of up to 30 % by mass.

12. The method according to claim 5,
where benzene hydroisomerisation occurs by using a catalyst of zeolite coated with a Group VIII metal and
where isomerisation occurs on a catalyst of a Group IV metal oxide coated with a Group VIII metal and promoted by sulphate and/or tungstate ions.

13. The method according to claim 5,
where the hydrogen to hydrocarbon molar ratio comprises between 0.01 and 5 to 1.

14. The method according to claim 5,
where the column temperature is in the range of 80°C to 350°C,
whereas the temperature in the upper part of the column is in the range of 80°C to 220°C, and whereas the temperature in the lower part of the column is in the range of 120°C and 350°C.

15. The method according to claim 5, where the column pressure is in the range of 1013 to 4053 kPa (10 to 40 atm gauge), and preferably between 3040 to 3546 kPa (30 and 35 atm gauge).

## Patentansprüche

1. Reaktives Rektifikationssystem für die Herstellung von Benzinkomponenten mit hoher Oktanzahl, umfassend
eine Rektifikationssäule mit einer Einspeisungszone und einer wasserstoffhaltigen Gas-Zuführzone, wobei das System auch ein Minimum an drei Reaktionszonen enthält, wobei mindestens eine der Reaktionszonen innerhalb der reaktiven Rektifikationssäule lokalisiert ist,
wobei mindestens eine davon eine Benzol-Hydroisomerisierungszone ist,
wobei mindestens eine andere davon eine Hexan-Isomerisierungszone ist und wobei mindestens eine andere davon eine Pentan-Isomerisierungszone ist,
wobei die Benzol-Hydroisomerisierungszone unterhalb aller anderen Reaktionszonen lokalisiert ist und sich im unteren Teil der Säule befindet,
wobei sich die Hexan-Isomerisierungszone oberhalb der Einspeisungszone und unterhalb der Pentan-Isomerisierungszone befindet,
wobei das System auch mindestens einen Seitenabzug enthält, der sich oberhalb der Hexan-Isomerisierungszone und unterhalb der Pentan-Isomerisierungszone befindet.

2. Reaktives Rektifikationssystem nach Anspruch 1, wobei sich alle drei Reaktionszonen innerhalb der Rektifikationssäule befinden und bevorzugt weiterhin umfassend vier Destillationszonen derart, dass alle Reaktionszonen durch Destillationszonen getrennt sind und wobei jede Reaktionszone eine zugehörige Wasserstoff-Zuführzone aufweist.

3. Reaktives Rektifikationssystem nach Anspruch 1, wobei sich die Einspeisungszone oberhalb der Benzol-Hydroisomerisierungszone befindet.

4. Reaktives Rektifikationssystem nach Anspruch 1,
wobei der Katalysator der Benzol-Hydroisomerisierungszone Zeolith ist, das mit einem Metall der Gruppe VIII beschichtet ist und
wobei der Katalysator der Pentan- und Hexan-Isomerisierungszonen ein Metalloxid der Gruppe IV ist, das mit einem Metall der Gruppe VIII beschichtet ist und durch Sulfat- und (oder) Wolframat-Ionen gefördert wird.

5. Verfahren zur Herstellung von Benzinkomponenten mit hoher Oktanzahl, unter Verwendung des reaktiven Rektifikationssystems nach Anspruch 1 umfassend die Schritte
- Zuführen des Einspeisungsstroms zu der Einspeisungszone der reaktiven Rektifikationssäule,
- Zurückgewinnen von Isohexanen aus dem Seitenabzug der reaktiven Rektifikationssäule,
- Zurückgewinnen von Isopentanen vom oberen Ende der reaktiven Rektifikationssäule und
- Zurückgewinnen von Cyclopentanen vom Boden der Säule.

6. Verfahren nach Anspruch 5, wobei die Einspeisungsstrom-Temperatur derart ist, dass der Strom Dampf-Flüssig ist, wobei Benzol vorteilhafterweise in flüssiger Phase vorliegt.

7. Verfahren nach Anspruch 6, wobei der Einspeisungsstrom in die Säulen-Destillationszone geliefert wird, die sich zwischen den Isomerisierungs- und Hydroisomerisierungszonen befindet.

8. Verfahren nach Anspruch 7,
wobei der Einspeisungsstrom in zwei Ströme getrennt wird, wenn er in die reaktive Rektifikationssäule eintritt, von denen einer absteigend ist und Benzol und Komponenten mit einer höheren molekularen Masse enthält, und der zweite Strom aufsteigend ist und Komponenten mit einer molekularen Masse enthält, die niedriger als die molekulare Masse von Benzol ist oder
wobei C4-C6-Alkane aus dem Einspeisungsstrom zu der Isomerisierungsreaktionszone geliefert werden, die sich oberhalb des Einlasspunktes des Einspeisungsstroms befindet und Aromaten, Cycloalkane, C7-Alkankohlenwasserstoffe und schwerere Einspeisungen zu der Hydroisomerisierungsreaktionszone geliefert werden, die sich unterhalb des Einlasspunktes des Einspeisungsstroms befindet.

9. Verfahren nach Anspruch 5, wobei Isomerisierungsreaktionen in Reaktionszonen auftreten, die sich außerhalb der Säule befinden, und die Produktmischung in die Säule zurückgeführt wird.

10. Verfahren nach Anspruch 5, wobei Kohlenwasserstoffe und Wasserstoff direkt in den Reaktionszonen gemischt werden und Wasserstoff zu jeder Reaktionszone getrennt geliefert wird.

11. Verfahren nach Anspruch 5, wobei der Einspeisungsstrom aus einer Fraktion von C4-C8-Kohlenwasserstoffen besteht, die Benzol in einer Menge von bis zu 30 Massen-% enthalten.

12. Verfahren nach Anspruch 5,
wobei die Benzol-Hydroisomerisierung unter Verwendung eines Katalysators aus Zeolith, das mit einem Metall der Gruppe VIII beschichtet ist, auftritt und
wobei die Isomerisierung an einem Katalysator eines Metalloxids der Gruppe IV auftritt, das mit einem Metall der Gruppe VIII beschichtet ist und durch Sulfat- und/oder Wolframat-Ionen gefördert wird.

13. Verfahren nach Anspruch 5, wobei das Wasserstoff zu Kohlenwasserstoff-Molverhältnis zwischen 0,01 und 5 zu 1 umfasst.

14. Verfahren nach Anspruch 5,
wobei die Säulentemperatur im Bereich von 80 °C bis 350 °C ist,
wobei die Temperatur im oberen Teil der Säule im Bereich von 80 °C bis 220 °C ist und wobei die Temperatur im unteren Teil der Säule im Bereich von 120 °C und 350 °C ist.

15. Verfahren nach Anspruch 5, wobei der Säulendruck im Bereich von 1013 bis 4053 kPa (10 bis 40 atm Manometer) und bevorzugt zwischen 3040 bis 3546 kPA (30 und 35 atm Manometer) ist.

## Revendications

1. Système de rectification réactive pour la production de composants d'essence à haut indice d'octane comprenant
une colonne de rectification ayant une zone d'alimentation et une zone d'apport de gaz contenant de l'hydrogène, le système contenant aussi un minimum de trois zones de réaction, tandis qu'au moins l'une des zones de réaction est située à l'intérieur de la colonne de rectification réactive,
dont au moins l'une est une zone d'hydroisomérisation du benzène,
dont au moins une autre est une zone d'isomérisation de l'hexane et
dont au moins une autre est une zone d'isomérisation du pentane,
la zone d'hydroisomérisation du benzène est positionnée au-dessous de toutes les autres zones de réaction et est située dans la partie inférieure de la colonne,
la zone d'isomérisation de l'hexane est située au-dessus de la zone d'alimentation et au-dessous de la zone d'isomérisation du pentane,
le système contient aussi au moins un soutirage latéral situé au-dessus de la zone d'isomérisation de l'hexane et au-dessous de la zone d'isomérisation du pentane.

2. Système de rectification réactive selon la revendication 1, où les trois zones de réaction sont toutes situées à l'intérieur de la colonne de rectification et comprenant de préférence en outre quatre zones de distillation de telle manière que toutes les zones de réaction sont séparées par des zones de distillation et où chaque zone de réaction a une zone d'apport d'hydrogène particulière.

3. Système de rectification réactive selon la revendication 1, où la zone d'alimentation est située au-dessus de l'hydroisomérisation du benzène.

4. Système de rectification réactive selon la revendication 1, où le catalyseur de la zone d'hydroisomérisation du benzène est une zéolite revêtue d'un métal du groupe VIII et où le catalyseur des zones d'isomérisation du pentane et de l'hexane est un oxyde de métal du groupe IV revêtu d'un métal du groupe VIII et activé par des ions sulfate et (ou) tungstate.

5. Procédé de production de composants d'essence à haut indice d'octane utilisant le système de rectification réactive selon la revendication 1 comprenant les étapes de
- apport du courant d'alimentation à la zone d'alimentation de la colonne de rectification réactive,
- récupération d'isohexanes à partir du soutirage latéral de la colonne de rectification réactive,
- récupération d'isopentanes à partir du sommet de la colonne de rectification réactive, et
- récupération de cyclopentanes à partir du fond de la colonne.

6. Procédé selon la revendication 5, où la température du courant d'alimentation est telle que le courant est gazeux-liquide, le benzène étant avantageusement dans la phase liquide.

7. Procédé selon la revendication 6, où le courant d'alimentation est amené dans la zone de distillation de la colonne située entre les zones d'isomérisation et d'hydroisomérisation.

8. Procédé selon la revendication 7, où le courant d'alimentation est séparé en deux courants quand il entre dans la colonne de rectification réactive avec un courant descendant et contenant du benzène et des composants avec une masse moléculaire plus élevée, et le second courant montant et contenant des composants avec une masse moléculaire inférieure à la masse moléculaire du benzène, ou bien
où les C4-C6 alcanes sont amenés du courant d'alimentation à la zone de réaction d'isomérisation située au-dessus du point d'entrée du courant d'alimentation et les aromatiques, les cycloalcanes, les hydrocarbures C7 alcanes et les alimentations plus lourdes sont amenés à la zone de réaction d'hydroisomérisation située au-dessous du point d'entrée du courant d'alimentation.

9. Procédé selon la revendication 5, où des réactions d'isomérisation se produisent dans des zones de réaction qui sont situées à l'extérieur de la colonne, et le mélange produit est renvoyé dans la colonne.

10. Procédé selon la revendication 5, où les hydrocarbures et l'hydrogène sont mélangés directement dans les zones de réaction et l'hydrogène est amené à chaque zone de réaction séparément.

11. Procédé selon la revendication 5, où le courant d'alimentation consiste en une fraction de C4-C8 hydrocarbures contenant du benzène à un niveau de jusqu'à 30 % en masse.

12. Procédé selon la revendication 5, où l'hydroisomérisation du benzène se produit au moyen d'un catalyseur de zéolite revêtu d'un métal du groupe VIII et où l'isomérisation se produit sur un catalyseur d'un oxyde de métal du groupe IV revêtu d'un métal du groupe VIII et activé par des ions sulfate et/ou tungstate.

13. Procédé selon la revendication 5, où le rapport molaire hydrogène à hydrocarbures est compris entre 0,01 et 5 à 1.

14. Procédé selon la revendication 5, où la température de la colonne est dans la plage de 80°C à 350°C, tandis que la température dans la partie supérieure de la colonne est dans la plage de 80°C à 220°C, et tandis que la température dans la partie inférieure de la colonne est dans la plage de 120°C et 350°C.

15. Procédé selon la revendication 5, où la pression de la colonne est dans la plage de 1013 à 4053 kPa (10 à 40 atm manométriques), et de préférence entre 3040 à 3546 kPa (30 et 35 atm manométriques).
